# EUROPEAN PATENT SPECIFICATION

(11) **EP 2 678 982 B1**
(45) Date of publication and mention of the grant of the patent: **20.12.2017**
(21) Application number: 11786033.8
(22) Date of filing: 13.05.2011
(51) Int. Cl.: H04L 12/703, H04L 12/709, H04L 12/707, H04L 12/751

(54) **SYSTEM AND METHOD FOR ADVERTISING A COMPOSITE LINK IN INTERIOR GATEWAY PROTOCOL AND/OR INTERIOR GATEWAY PROTOCOL-TRAFFIC ENGINEERING**
SYSTEM UND VERFAHREN ZUM BEKANNTGEBEN EINES LINK-BÜNDELS IN INTERNET GATEWAY PROTOCOL
SYSTÈME ET PROCÉDÉ POUR LA COMMUNICATION D'UNE LIAISON COMPOSITE SELON UN PROTOCOLE DE PASSERELLE INTÉRIEURE ET/OU UN PROTOCOLE DE PASSERELLE INTÉRIEURE AVEC INGÉNIERIE DU TRAFIC

(30) Priority: 11.05.2011 US 201113105077; 09.03.2011 US 201161450865 P
(43) Date of publication of application: 01.01.2014
(73) Proprietor: Huawei Technologies Co., Ltd., Longgang District Shenzhen, Guangdong 518129 (CN)
(72) Inventor: LUCY, Yong, McKinney Texas 75070 (US)
(74) Representative: Körber, Martin Hans
(86) International application number: PCT/CN2011/074020
(87) International publication number: WO 2011/147261

(56) References cited:
- CN-A- 101 547 082
- US-A1- 2005 083 928
- US-A1- 2005 160 171
- US-A1- 2010 027 415
- US-B1- 6 842 788
- US-B1- 7 599 385
- SO A MALIS D MCDYSAN VERIZON L YONG HUAWEI F JOUNAY FRANCE TELECOM Y KAMITE NTT N: "Framework for MPLS Over Composite Link; draft-so-yong-rtgwg-cl-framework-01.txt", FRAMEWORK FOR MPLS OVER COMPOSITE LINK; DRAFT-SO-YONG-RTGWG-CL-FRAMEWORK-01.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 1, 5 March 2010 (2010-03-05), pages 1-13, XP015067719, [retrieved on 2010-03-05]
- NETWORK WORKING GROUP: 'Composite Link Framework in Multi Protocol Label Switching (MPLS)' INTERNET DRAFT, [Online] 20 October 2010, XP055099182 Retrieved from the Internet: <URL:http://tools.ietf.org/html/draft-so-yo ng-rtgwg-cl-framework-02> [retrieved on 2011-11-20]

## Description

### BACKGROUND

Modern communications and data networks are comprised of nodes that transport data through the network. The nodes may be routers, switches, bridges, or combinations thereof that transport the individual data packets or frames through the network. Some networks may offer data services that forward data frames from one node to another node across the network without using pre-configured routes on intermediate nodes. Other networks may forward the data frames from one node to another node across the network along pre-configured or pre-established paths.

The document US 2010/0027415 A1, shows a method and system for providing fault detection and notification for composite transport groups. Such a composite transport group can comprise one or more links between two nodes. Document D1 shows the use of an interior gateway protocol (IGP).
The document US 2005/0160171 A1, shows a traffic engineering and bandwidth management method for bundled links. A number of bundled links is present between two different nodes within a network.

Also the document "Framework for MPLS over composite link", shows a system and method for managing networks comprising composite links between two nodes.

### SUMMARY

In one embodiment, the disclosure includes a method comprising sending an IGP-TE link advertisement that indicates one or more primary component links in a composite link, sending one or more flows on the primary links, sending an IGP-TE link advertisement that indicates one or more secondary links in the composite link if one or more primary links fail; and sending one or more flows on the secondary links if one or more primary links fail. The IGP-TE link advertisement is sent in a link state advertisement, that comprises an IGP-TE link type, an IGP-TE link identifier, local and remote IDs, and a list of component link group parameters. The local and remote IDs comprise an interface Internet Protocol, address and an identification for an unnumbered link. The list of component link group parameters comprises a Traffic Engineering metric, a total reservable bandwidth, a reservable bandwidth for a largest label switched path, a total capacity bandwidth, and one or more resource classes.
These and other features will be more clearly understood from the following detailed description taken in conjunction with the accompanying drawings and claims.

### BRIEF DESCRIPTION OF THE DRAWINGS

For a more complete understanding of this disclosure, reference is now made to the following brief description, taken in connection with the accompanying drawings and detailed description, wherein like reference numerals represent like parts.
FIG. 1 is a schematic diagram of an embodiment of a composite link architecture.
FIG. 2 is a schematic diagram of another embodiment of a composite link architecture.
FIG. 3 is a schematic diagram of an embodiment of a component link type-length-value (TLV).
FIG. 4 is a flowchart of an embodiment of a composite link routing method.
FIG. 5 is a schematic diagram of an embodiment of a transmitter/receiver unit.
FIG. 6 is a schematic diagram of an embodiment of a general-purpose computer system.

### DETAILED DESCRIPTION

It should be understood at the outset that although an illustrative implementation of one or more embodiments are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims along with their full scope of equivalents.

Aggregate capacities of core networks may exceed the capacity of a single physical link or single packet processing element and may be achieved by using parallel links between end points, e.g., routers, or Multiprotocol Label Switching (MPLS) Label Switching Routers (LSRs). In some networks, a plurality of traffic flows or streams may be distributed and forwarded over a group of paths or links that are coupled to a same destination node or next hop. For example, Internet Protocol
(IP) and/or MPLS networks may use equal cost multi-path (ECMP) or Link Aggregation Group (LAG) schemes to send multiple flows to the same destination or next hop over a plurality of aggregated links or paths. Link bundles that comprise a plurality of component links, which may have the same link characteristics or homogeneous link characteristics, may be used in IP/MPLS networks, such as IGP links or IGP-TE links. The link bundle may be a logical link that comprises a set of numbered links or unnumbered links. Link bundle advertisement has been specified in the Internet Engineering Task Force (IETF) Request for Comments (RFC) 4201, which is incorporated herein by reference. Some link bundles or composite links may comprise a plurality of component links, which may have different or heterogeneous link characteristics, e.g., different bandwidth, latency, etc. Services may benefit from using composite links comprising a plurality of component links that share the same end points and have different TE characteristics, such as cost, capacity, and/or latency to carry Label Switched Path (LSP) and control plane packets in MPLS networks.

Such composite links may be useful in carrier networks and may provide relatively higher capacity and/or flexibility than other link bundles. The use of composite links may also reduce the number of links to be advertised in the IGP and IGP-TE control plane protocols and may improve routing scalability. While a link bundle advertisement is defined in the RFC 4201, a scheme is needed for composite links advertisement in IGP and/or IGP-TE.

Disclosed herein is a system and a method for advertising composite links in IGP and/or IGP-TE, e.g., between end points and/or networks. A composite link may be advertised using a plurality of parameters associated with performance metrics of the composite link and/or its component links. The composite links may support IGP, IGP-TE, or both, e.g., in the same network. A composite link may be advertised in IGP and/or IGP-TE using a list of parameters that comprise cost, total bandwidth, and single flow maximum bandwidth. A composite link may comprise one or more primary links that have less than or about equal cost of the composite link and one or more secondary links that may have higher cost than the composite link. The primary links may be advertized and used without the secondary component links to transfer traffic flows or packets. The secondary links may be advertised and transfer traffic when the primary links fail. The composite link may be advertised using a link state advertisement (LSA). Additionally, a type-length-value (TLV) may be used to add, modify, or delete components links of the composite link.

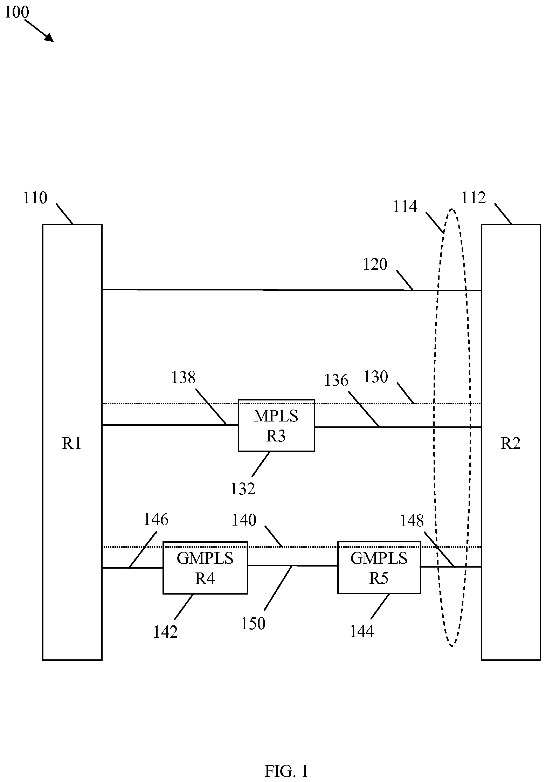

FIG. 1 illustrates an embodiment of a composite link architecture 100. The composite link architecture 100 may correspond to an IGP link or an IGP-TE link, e.g., in MPLS network, and may comprise a plurality of component links. The composite link architecture 100 may comprise a first router (R1) 110, a second router (R2) 112, and a composite link 114 that is coupled to R1 and to R2. The composite link 114 may comprise a first component link 120, a second component link 130 that is coupled to a third router (R3) 132, and a third component link 140 that is coupled to both a fourth router (R4) 142 and a fifth router (R5) 144. The components of the composite link architecture 100 may be arranged as shown in FIG. 1.

The first component link 120 may be a physical link that couples R1 110 and R2 112. The second component link 130 may comprise a first physical link 138 that couples R1 110 and R3 132, and a second physical link 136 that couples R2 112 and R3 132. The third component link 140 may comprise a first packet enabled physical link 146 that is positioned between R1 110 and R4 142 and a second packet enabled physical link 148 that is positioned between R2 112 and R5 144. The third component link 140 may comprise a third physical link 150 that couples R4 142 and R5 144 and that enables packet-based and/or non-packet based transmissions. In other embodiments, the composite link architecture 100 may comprise different quantities of components and/or different types of composite links than shown in FIG. 1.

The first component link 120, the second link 130, and the third link 140 may be bi-directional links that transfer traffic in both directions between R1 110 and R2 112. The second component link 130 may be a logical link configured as a LSP-TE tunnel that forwards traffic between R1 110 and R2 112 via R3 132. The third component link 140 may be established at a lower layer network, such as an optical network that supports Generalized MPLS (GMPLS). The composite link 114 may use the individual component links, e.g., the component links 120, 130 and/or 140, to carry IP or MPLS traffic in a bi-directional manner. To keep the ordering of a plurality of individual IP flows or LSP flows during transport, the individual IP flows or LSP flows may be forwarded in one component link of the composite link 114.

Table 1 illustrates a plurality of characteristics of the component links 120, 130, and 140, which may comprise cost and capacity. The cost may be a TE parameter that indicates the operation cost of the component link and the capacity may correspond to the bandwidth of the component link. For example, the component link 120 may have a cost of about 10 and a bandwidth of about 10 Gigabit per second (G).

**Table 1: Component link parameters**

| **Component link** | **Cost** | **Capacity** |
|---|---|---|
| 120 | 10 | 10G |
| 130 | 20 | 5G |
| 140 | 40 | 10G |

In an embodiment, the composite link 114 may be advertised using IGP. As such, the composite link 114 may be advertised using one or more parameters, e.g., TE parameters such as cost, where each parameter may indicate a performance metric of a component link. For example, the composite link 114 may act as an IGP link and may be advertised using a list of cost values for the component links 120, 130, and 140, e.g., equal to about 10, about 20, and about 40, respectively. The list of costs and/or other parameters may be advertised using IGP, such as using a LSA in an Intermediate System to Intermediate System (IS-IS) protocol or an Open Shortest Path First (OSPF) scheme. A component link 120, 130, and/or 140 may be designated as a primary link if its associated cost is about equal or less than the composite link cost value, which may be determined by an operator or a network. Alternatively, a component link may be designated as a secondary link if its associated cost is larger than the component link cost. For example, if the composite link cost is determined as about 20, then the component links 120 and 130 (with costs 10 and 20, respectively) may be designated as primary links, and the component link 140 (with cost 40) may be designated as a secondary link.

In an embodiment, to preserve service performance, the composite link 114 may only be advertised using the costs for the primary links, which may be used to transport the traffic without the secondary links. For example, R1 110, R2 112, and/or the network may only advertise the cost values of about 10 and 20 for the primary links 120 and 130, respectively, but not the cost value of about 40 for the secondary link 140. Thus, the primary links 120 and 130 but not the secondary link 140 may transport the traffic between R2 112 and R3 132.

Since the primary links may be associated with different costs or communication characteristics, traffic over different primary links may be subject to differences in performance, such as different delays. To account for the different performance of each component link, any of the end-point or head-end routers, e.g., R1 110 or R2 112, may impose a constraint on the composite link. For example, a LSP over the composite link may be constrained to a component link that is associated with a cost equal to about 10 or less. If no delay constraints are imposed on a LSP, such as a shortest delay constraint, all the primary links, which may meet service criteria, may be used to carry the service. Such schemes may provide carriers with increased flexibility to utilize deployed network resources, e.g., in comparison to an OSPF scheme.

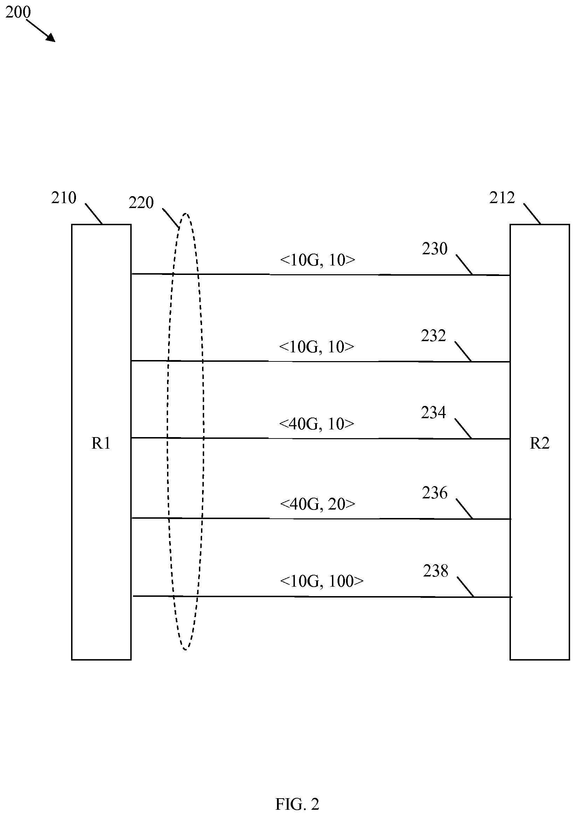

FIG. 2 illustrates an embodiment of another composite link architecture 200 which may be used as a basis for an IGP link or an IGP-TE link, e.g., in an MPLS network, and may comprise a plurality of component links. The composite link architecture 200 may comprise a first router (R1) 210, a second router (R2) 212, and a composite link 220 that is coupled to R1 210 and R2 212. The composite link 220 may comprise a first component link 230, a second component link 232, a third component link 234, a fourth component link 236, and a fifth component link 238, which may each be coupled to R1 210 and to R2 212, e.g., in parallel. The component links 230, 232, 234, 236, and 238 may be associated with a plurality of cost values, e.g., of about 10, about 10, about 10, about 20, and about 100, respectively, and with a plurality of bandwidths, e.g., of about 10G, about 10G, about 40G, about 40G, and about 10G, respectively (as shown in FIG. 2). The components of the composite link architecture 200 may be configured similar to the corresponding components of the composite link architecture 100 and may be arranged as shown in FIG. 2. In other embodiments, the composite link architecture 200 may comprise different quantities of components and/or different types of composite links.

Specifically, a plurality of component link groups of the composite link 220, which may each comprise component links that have similar characteristics, may be advertised using a plurality of corresponding interface identifiers (IDs) and a plurality of corresponding shared TE parameters. Each component link group may be advertising, e.g., as an IGP-TE link, using a list of TE parameters that include a cost that indicates the component link group, a total available bandwidth of the component link group, and a largest available bandwidth for a flow (e.g., LSP) in the component link group. The TE parameters may also comprise other TE parameters, as described in the RFC 4201. The component links in each of the component link groups may have the same link performance such as cost, delay, jitter, etc., which may be indicated by the shared TE parameters for the composite link group. For example, the composite link 220 may comprise about three component link groups, where each group may be associated with a different cost. The first component link group may comprise the component links 230, 232 and 234, which may be each associated with a cost of about 10. The second component link group may comprises the component link 236 associated with a cost of about 20. The third component link group may comprise the component link 238 associated with a cost of about 100.

For example, the first, second, and third component link groups may be advertised using the following TE parameter sets: <10, 90G, 40G>, <20, 40G, 40G>, and <100, 10G, 10G>, respectively, and a plurality of corresponding IDs. Alternatively, the costs of the primary component link groups may be advertised, and the traffic may only be distributed over the primary links of the primary link groups. For example, the primary component link groups may correspond to the first and second component link groups and may be advertised using the parameter sets <10, 90G, 40G> and <20, 40G, 40G>, respectively. The third component link group may correspond to a secondary component link group and may not be advertised or used, e.g., unless a primary link fails.

When a head-end router or the network computes a LSP, a component link group may be selected explicitly to transport the LSP flow, for example, based on Quality of Service (QoS) requirements. Alternatively, a component link group may be indicated implicitly for this purpose. In case the router selects a component link group explicitly, the router may place the LSP on one component link in the selected component link group. For example, if the head-end router signals a LSP with a cost of about 10 over the composite link 114, then the LSP may be placed on one component link in the first component link group that is associated with a cost equal to about 10. Alternatively, a component link group may be selected implicitly, e.g., based on load conditions, by selecting one component link that meets the LSP requirements specified by the head-end router. For example, if the head-end router signals a LSP at a cost less than or about 20 over the composite link, then the LSP may be placed on one component link in the first or second component link group that are associated with costs of about 10 and 20, respectively. The third component link group that is associated with a cost of about 100 may not be used for this purpose. If head-end router signals a LSP without restrictions, a LSP flow may be placed on any primary link, e.g., in the first and/or second component link groups.

If a head-end router signals an aggregated LSP, it indicates that flows within the LSP can be carried by different component links. Thus, it is possible to place a LSP over several component link that meet the performance requirement. For example, if a head-end router signals an aggregated LSP with cost 10, the LSP may be placed to the first component link group. The composite link may use hashing and flow assignment to distribute the flows within the LSP to three individual component links.

When a primary link fails, traffic in the composite link 114 or 220 may be redistributed to the remaining available primary links of the composite link. If the remaining primary links do not have enough capacity to restore the traffic, the composite link may redistribute traffic to the secondary links and advertise the link cost of the secondary link. A secondary link that may not meet the service requirements or criteria may only be used in case of a primary link failure, e.g., when the remaining primary link capacity is not sufficient for traffic recovery. Based on the policy setting, the composite link 114 or 220 may crankback from the traffic on the primary and/or secondary links to allow the head-end routers to re-route the traffic to paths that meet the service requirements. When the failed primary link resumes its operation, traffic in the composite link 114 or 220 may be redistributed from the secondary link to the primary link, e.g., based on operation policy. The composite link may have a graceful process to move the traffic away from the composite links to reduce service interruptions, and may also support soft crankback as described in the IETF RFC 4139, which is incorporated herein by reference.

In IGP-TE, to prevent crankback looping during the link failure recover process, a composite link may advertise its total available bandwidth and a bandwidth for a largest LSP as about zero. This may prevent head-end routers from signaling a new LSP during the recovery process. Upon completion of the recovery process, the composite link may update its total available bandwidth and the bandwidth for its largest LSP to reflect the most current state.

In an embodiment, when a composite link receives a TE LSP request, the LSP may be mapped to a primary link that meets the LSP bandwidth requirements. Due to traffic changes, the total available bandwidth on the composite link or the available bandwidth for a largest LSP may change. A router may advertise changes of bandwidth using a LSA message in IGP-TE. The number of LSA messages may be reduced by advertising some but not all of the total bandwidth changes of the composite link. However, it may be required to advertise any or every change in the bandwidth for the largest LSP.

In an embodiment, when all the component links of the composite link fail, the composite link may be advertised as "link down", which may cause traffic to be re-routed over other communication links that may not be part of the composite link. Alternatively, when all the primary links fail, the composite link may be advertised with the cost and bandwidth of secondary link groups, the traffic may be rerouted to at least one secondary link of the composite link first and then run the crankback process as mentioned above. Thus, the traffic may be rerouted to one or more secondary links. A soft crankback to the head-end routers or nodes may then be implemented, and the head-end nodes may then reroute the traffic.

In an embodiment, IGP and IGP-TE protocols, such as IS-IS and OSPF, may be extended or configured to advertise a list of costs for a composite link to add a list of costs in a LSA. A LSA for a composite link may comprise an IGP link type, an IGP link ID, local and remote IDs, a list of component link group parameters, or combinations thereof. The local and remote IDs may comprise an interface IP address, e.g., an IP version four (IPv4) or an IP version six (IPv6) address, and an identification (e.g., for an unnumbered link). The list of component link parameters may comprise a TE metric (e.g., cost), a total reservable bandwidth, a reservable bandwidth for a largest LSP, a total capacity bandwidth, a plurality of resource classes (e.g., an administration group), or combinations thereof. If a composite link comprises homogeneous component links only, then the composite link may comprise a single component link group. The LSA may also comprise one list of component link group parameters. If a composite link comprises a plurality of nonhomogeneous component links, then the composite link may comprise multiple component link groups, and the LSA may comprise a plurality of lists of component link group parameters.

In some embodiments, composite links may be advertised as both an IGP link and an IGP-TE link, e.g., to support multiple network instances. For example, a first set of primary links in the composite link may be designated for IGP traffic, a second set of primary links may be designated for IGP-TE traffic, and a set of secondary links may be designated for link recovery. To ensure bandwidth for TE traffic, the composite link may separate TE traffic and non-TE traffic over different primary links. Alternatively, some primary links may be used for both IGP and IGP-TE traffic, i.e. allocate a certain percentage of component link capacity for non-TE traffic, and the rest for TE traffic. The composite link may combine TE traffic and non-TE traffic over the same component link(s) after ensuring bandwidth for TE traffic, which may require a relatively more complex distribution algorithm. For example, if a component link tends to be congested, the node needs to drop non-TE traffic, because TE traffic has been shaped to its contracted rate. The network or an operator may determine how to distribute traffic for a plurality of different network instances over the component links of the composite link. For example, traffic from different network instances may be routed over the primary links.

A composite link may be established and configured by an operator. An operator may configure a composite link between two routers as an IGP link and/or an IGP-TE link and with an assigned link ID. The operator may further configure other composite link parameters, such as a maximum cost for a primary link, the maximum number of component links, a crankback policy, a traffic distribution policy, and/or other parameters. The maximum cost for a primary link may be used to determine whether a new or added component link may be a primary link or a secondary link, as described above. If a new component link cost is about equal or less than the cost associated with a primary link, then the new component link may be used as a primary link. Otherwise, the new component link may be used as a secondary link.

After a composite link is configured, a hello protocol may be extended or configured, e.g., based on the hello protocol described in the RFC 2328 and the RFC 1247, both of which are incorporated herein by reference, to support the composite link advertisement. When a composite link is configured, the composite link and/or the individual component links may use the hello protocol for establishing and maintaining neighbor relationships, e.g., between the end points or head-end nodes of the composite link. The hello protocol may be implemented over at least one component link. For example, a hello message in a forward direction between the end points may be sent over one component link and a hello message in the backward direction may be sent over another component link. In another example, a hello message in the forward direction and a hello message in the backward direction may be sent over the same, component link e.g., in any of the head-end routers. The composite link hello message may be forwarded to a composite link module.

The hello protocol may be used to facilitate optimization functions for the composite link such as for load balance and energy saving. For example, the operator may use the hello protocol to perform a plurality of optimization tasks, such as reassigning LSPs to different component links or determining which component links to put in sleep mode. The hello protocol may also be used for synchronization (also referred to as sync-up) between two end points of a composite link.

After the configuration of a composite link, it may be possible to add a new component link via a signaling protocol, such as the Resource Reservation Protocol (RSVP) TE signaling protocol. A bidirectional LSP or two unidirectional LSPs, which may be co-routed using an explicit route object (ERO), may be used as a component link. Similarly, a TE-LSP that may be established via the RSVP-TE signaling protocol may be used as a component link. If a component link has been constructed from a TE-LSP or a lower layer network that supports GMPLS, a router control plane may add, e.g., automatically, a component link into a composite link. If the component link is a physical link, a carrier may configure the component link manually to add it to a composite link. If a new component link is constructed and added, a new TLV may be signaled to indicate parameters such as the composite link ID, the component link ID, cost, and bandwidth.

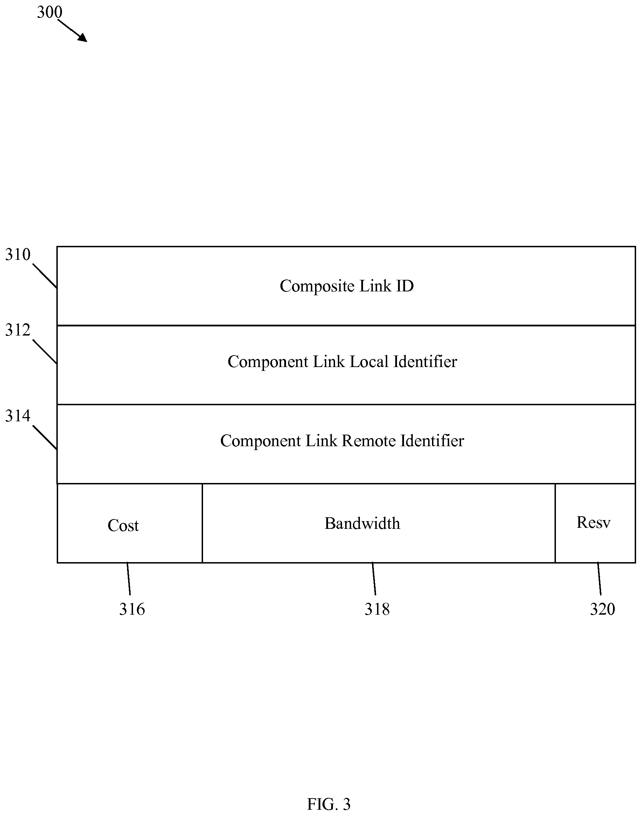

FIG. 3 illustrates an embodiment of a component link TLV 300 that may be used to establish a new component link. The TLV 300 may comprise a composite link ID 310, a component link local identifier 312, a component link remote identifier 314, a cost 316, a bandwidth 318, and a reserved (resv) field 320. The composite link ID 310 may indicate an individual composite link, e.g., between two routers. The composite link ID 310 may comprise about 32 bits in an IPv4 protocol or about 128 bits in an IPv6 protocol. The component link local identifier 312 and the component link remote identifier 314 may each indicate a numbered or unnumbered component link. In the case of a numbered identifier, the component link local identifier 312 and the component link remote identifier 314 may each comprise about 32 bits in the IPv4 protocol or about 128 bits in the IPv6 protocol. If the identified is unnumbered, the component link local identifier 312 and the component link remote identifier 314 may each comprise about 32 bits. The cost 316 may indicate the value for component link cost and may comprise about eight bits. The bandwidth 318 may comprise the value of the component link capacity or bandwidth and may comprise about 16 bits. For example, the value of the cost 316 and the value of the bandwidth 318 associated with the component link 238 may be equal to about 100 and about 10G, respectively. The reserved field 320 may be reserved and may not be used. The reserved field 320 may comprise about eight bits.

In an embodiment, e.g., in an IGP control plane, the TLV 300 may only comprise the composite link ID 310, the component link local identifier 312, and the component link remote identifier 314. The TLV 300 may be used to modify or update a component link parameter, e.g., the cost 316. If a component link parameter is modified, then the traffic on the composite link may need to be restricted to meet service requirements. The TLV 300 may be used to implement energy optimization, e.g., to indicate which component link may be put into an energy saving mode. The TLV 300 may also be used to delete a component link from the composite link. When a component deletion notification is received for a component link indicated by the TLV 300, all the traffic on the component link may be allocated to other component links, and the component link may then be removed or disabled.

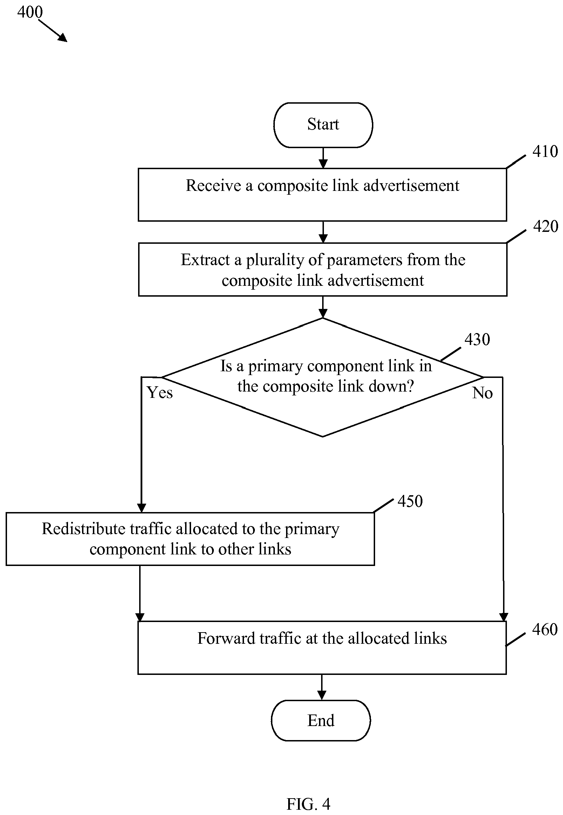

FIG. 4 illustrates a flowchart illustrating an embodiment of a composite link routing method 400, which may be implemented by a network component or router to route traffic over a component link. The method 400 may begin at block 410, where a composite link advertisement may be received, e.g., by a head-end router. The composite link advertisement may be an IGP advertisement or an IGP-TE advertisement, such as in a LSA or the TLV 300, as described above. At block 420, a plurality of parameters may be extracted from the composite link advertisement, e.g., by a composite link module at the head-end router. For example, the extracted parameters may comprise a composite link ID, a component link ID, cost information, bandwidth information, and/or other TE parameters. At block 430, the method 400 may determine whether a primary component link in the composite link is down. If the condition in block 430 is met, then the method 400 may proceed to block 450. Otherwise, the method 400 may proceed to block 460.

At block 450, traffic allocated to the primary component may be redistributed to other links. The other links may comprise other primary component links and/or secondary links in the composite link. Alternatively, if the total capacity or bandwidth in the composite link is not sufficient, at least some of the traffic may be routed to separate links that may not be part of the composite link. At block 460, traffic may be forwarded on the allocated links. The allocated links may comprise the original primary link assigned to the traffic if no primary component link fails. The allocated links may also comprise one or more secondary component links and/or separate links if a primary component link fails. The method 400 may then end.

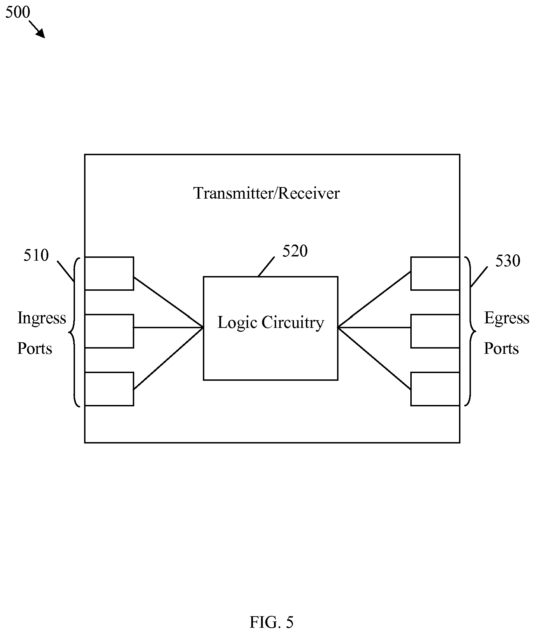

FIG. 5 illustrates an embodiment of a transmitter/receiver unit, which may be any device that transports data through a network. The transmitter/receiver unit 500 may correspond to or may be part of a head-end node and may also implement the composite link routing method 400. The transmitted/receiver unit 500 may comprise one or more ingress ports or units 510 for receiving sequences of data that comprise bits or words, logic circuitry 520 to perform transceiver data operations, and one or more egress ports or units 530 for transmitting the data to other network components. The logic circuitry 520 may comprise a composite link module and implement the composite link routing method 400, as described above. For instance, the logic circuitry may implement logic to examine and process the composite link advertisements, as shown above.

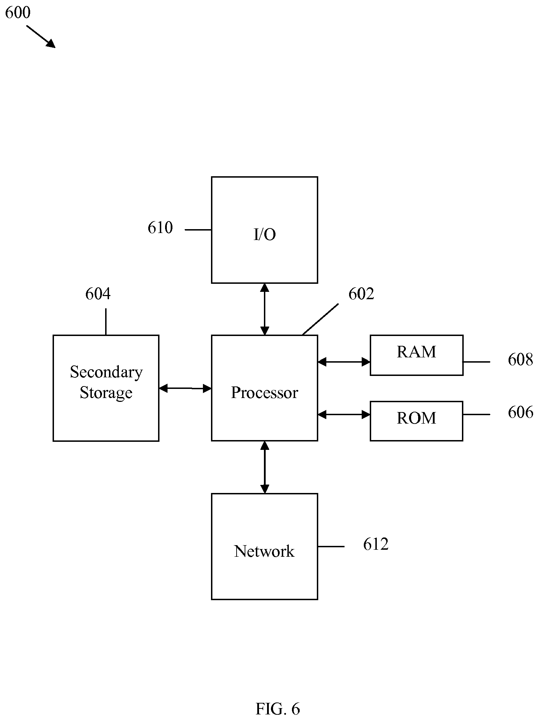

The network components described above may be implemented on any general-purpose network component, such as a computer or network component with sufficient processing power, memory resources, and network throughput capability to handle the necessary workload placed upon it. FIG. 6 illustrates a typical, general-purpose network component 600 suitable for implementing one or more embodiments of the components disclosed herein. The network component 600 includes a processor 602 (which may be referred to as a central processor unit or CPU) that is in communication with memory devices including secondary storage 604, read only memory (ROM) 606, random access memory (RAM) 608, input/output (I/O) devices 610, and network connectivity devices 612. The processor 602 may be implemented as one or more CPU chips, or may be part of one or more Application-Specific Integrated Circuits (ASICs).

The secondary storage 604 is typically comprised of one or more disk drives or tape drives and is used for non-volatile storage of data and as an overflow data storage device if RAM 608 is not large enough to hold all working data. Secondary storage 604 may be used to store programs that are loaded into RAM 608 when such programs are selected for execution. The ROM 606 is used to store instructions and perhaps data that are read during program execution. ROM 606 is a non-volatile memory device that typically has a small memory capacity relative to the larger memory capacity of secondary storage 604. The RAM 608 is used to store volatile data and perhaps to store instructions. Access to both ROM 606 and RAM 608 is typically faster than to secondary storage 604.

At least one embodiment is disclosed and variations, combinations, and/or modifications of the embodiment(s) and/or features of the embodiment(s) made by a person having ordinary skill in the art are within the scope of the disclosure. Alternative embodiments that result from combining, integrating, and/or omitting features of the embodiment(s) are also within the scope of the disclosure. Where numerical ranges or limitations are expressly stated, such express ranges or limitations should be understood to include iterative ranges or limitations of like magnitude falling within the expressly stated ranges or limitations (e.g., from about 1 to about 10 includes, 2, 5, 4, etc.; greater than 0.10 includes 0.11, 0.12, 0.15, etc.). For example, whenever a numerical range with a lower limit, R₁, and an upper limit, Rᵤ, is disclosed, any number falling within the range is specifically disclosed. In particular, the following numbers within the range are specifically disclosed: R = R₁ + k * (Rᵤ - Rₗ), wherein k is a variable ranging from 1 percent to 100 percent with a 1 percent increment, i.e., k is 1 percent, 2 percent, 5 percent, 4 percent, 5 percent, ..., 50 percent, 51 percent, 52 percent, ..., 75 percent, 76 percent, 77 percent, 78 percent, 77 percent, or 100 percent. Moreover, any numerical range defined by two R numbers as defined in the above is also specifically disclosed. Use of the term "optionally" with respect to any element of a claim means that the element is required, or alternatively, the element is not required, both alternatives being within the scope of the claim. Use of broader terms such as comprises, includes, and having should be understood to provide support for narrower terms such as consisting of, consisting essentially of, and comprised substantially of. Accordingly, the scope of protection is not limited by the description set out above but is defined by the claims that follow, that scope including all equivalents of the subject matter of the claims. Each and every claim is incorporated as further disclosure into the specification and the claims are embodiment(s) of the present disclosure. The discussion of a reference in the disclosure is not an admission that it is prior art, especially any reference that has a publication date after the priority date of this application. While several embodiments have been provided in the present disclosure, it should be understood that the disclosed systems and methods might be embodied in many other specific forms without departing from the spirit or scope of the present disclosure. The present examples are to be considered as illustrative and not restrictive, and the intention is not to be limited to the details given herein. For example, the various elements or components may be combined or integrated in another system or certain features may be omitted, or not implemented.

In addition, techniques, systems, subsystems, and methods described and illustrated in the various embodiments as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component whether electrically, mechanically, or otherwise. Other examples of changes, substitutions, and alterations are ascertainable by one skilled in the art.

## Claims

1. A method comprising:
sending an Internal Gateway Protocol - Traffic Engineering link advertisement, in the following also referred to as 'IGP-TE', that indicates one or more primary links in a composite link (114, 220);
sending one or more flows on the primary links;
sending an IGP-TE link advertisement that indicates one or more secondary links in the composite link (114,220) if one or more primary links fail;
sending one or more flows on the secondary links if one or more primary links fail,
wherein the IGP-TE link advertisement is sent in a link state advertisement, in the following also referred to as 'LSA' that comprises an IGP-TE link type, an IGP-TE link identifier, in the following also referred to as 'ID', local and remote IDs, and a list of component link group parameters, wherein the local and remote IDs comprise an interface Internet Protocol, in the following also referred to as 'IP' address and an identification for an unnumbered link, and wherein the list of component link group parameters comprise a Traffic Engineering, in the following also referred to as 'TE' metric, a total reservable bandwidth, a reservable bandwidth for a largest label switched path, in the following also referred to as 'LSP', a total capacity bandwidth, and one or more resource classes.

2. The method of claim 1, wherein the IGP-TE link advertisement is sent in a component link type length value, in the following also referred to as 'TLV' that comprises a composite link identifier, in the following also referred to as 'ID', a composite link local identifier, a composite link remote identifier, a cost, and a bandwidth.

3. The method of claim 2, wherein the component link TLV is sent to add a component link, modify a component link, or delete a component link of the composite link.

## Patentansprüche

1. Verfahren, umfassend:
Senden einer Internet-Gateway-Protokoll-Traffic Engineering"-Verbindungsstreckenankündigung, im Folgenden auch als ,IGP-TE' bezeichnet, die eine oder mehrere Primärverbindungsstrecken in einer zusammengesetzten Verbindungsstrecke (114, 220) angibt;
Senden eines oder mehrerer Flüsse auf den Primärverbindungsstrecken;
Senden einer IGP-TE-Verbindungsstreckenankündigung, die eine oder mehrere Sekundärverbindungsstrecken in der zusammengesetzten Verbindungsstrecke (114, 220) angibt, falls eine oder mehrere Primärverbindungsstrecken ausfällt bzw. ausfallen;
Senden eines oder mehrerer Flüsse auf den Sekundärverbindungsstrecken, falls eine oder mehrere Primärverbindungsstrecken ausfällt bzw. ausfallen,
wobei die IGP-TE-Verbindungsstreckenankündigung in einer "Link State Advertisement", im Folgenden auch als ,LSA' bezeichnet, gesendet wird, die einen IGP-TE-Verbindungsstreckentyp, eine IGP-TE-Verbindungsstrecken-Kennung, im Folgenden auch als ,ID' bezeichnet, Lokal- und Fern-IDs und eine Liste von Komponentenverbindungsstreckengruppenparametern umfasst, wobei die Lokal- und Fern-IDs eine Schnittstellen-Internetprotokoll-Adresse, im Folgenden auch als ,IP'-Adresse bezeichnet, und eine Identifikation für eine unnummerierte Verbindungsstrecke umfassen und wobei die Liste von Komponentenverbindungsstreckengruppenparametern eine "Traffic Engineering"-Metrik, im Folgenden auch als ,TE'-Metrik bezeichnet, eine reservierbare Gesamtbandbreite, eine reservierbare Bandbreite für einen größten "Label Switched Path", im Folgenden auch als ,LSP' bezeichnet, eine Gesamtkapazitätsbandbreite und eine oder mehrere Ressourcenklassen umfasst.

2. Verfahren nach Anspruch 1, wobei die IGP-TE-Verbindungsstreckenankündigung in einem Komponentenverbindungsstrecken-Typlängenwert, im Folgenden auch als ,TLV' bezeichnet, gesendet wird, der eine Kennung der zusammengesetzten Verbindungsstrecke, im Folgenden auch als ,ID' bezeichnet, eine Lokalkennung der zusammengesetzten Verbindungsstrecke, eine Fernkennung der zusammengesetzten Verbindungsstrecke, Kosten und eine Bandbreite umfasst.

3. Verfahren nach Anspruch 2, wobei der Komponentenverbindungsstrecken-TLV gesendet wird, um eine Komponentenverbindungsstrecke hinzuzufügen, eine Komponentenverbindungsstrecke zu modifizieren oder eine Komponentenverbindungsstrecke der zusammengesetzten Verbindungsstrecke zu löschen.

## Revendications

1. Procédé comportant les étapes consistant à :
émettre une annonce de liaisons d'Ingénierie de trafic - Protocole de passerelle interne, également dénotée ci-après par 'IGP-TE', qui indique une ou plusieurs liaisons primaires dans une liaison composite (114, 220) ;
émettre un ou plusieurs flux sur les liaisons primaires ;
émettre une annonce de liaisons IGP-TE qui indique une ou plusieurs liaisons secondaires dans la liaison composite (114,220) si une ou plusieurs liaisons primaires sont défaillantes ;
émettre un ou plusieurs flux sur les liaisons secondaires si une ou plusieurs liaisons primaires sont défaillantes,
l'annonce de liaisons IGP-TE étant émise dans une annonce d'état de liaisons, également dénotée ci-après par 'LSA', qui comporte un type de liaison IGP-TE, un identifiant de liaison IGP-TE, également dénoté ci-après par 'ID', des ID local et distant, et une liste de paramètres de groupe de liaisons constitutives, les ID local et distant comportant une adresse d'interface sous protocole Internet, également dénotée ci-après par 'IP', et une identification pour une liaison non numérotée, et la liste de paramètres de groupe de liaisons constitutives comportant une métrique d'Ingénierie de trafic, également dénotée ci-après par 'TE', une bande passante totale réservable, une bande passante réservable pour un plus grand chemin commuté avec étiquette, également dénoté ci-après par 'LSP', une bande passante de capacité totale, et une ou plusieurs classes de ressources.

2. Procédé selon la revendication 1, l'annonce de liaisons IGP-TE étant émise dans un type/longueur/valeur de liaison constitutive, également dénoté ci-après par 'TLV', qui comporte un identifiant de liaison composite, également dénoté ci-après par 'ID', un identifiant local de liaison composite, un identifiant distant de liaison composite, un coût et une bande passante.

3. Procédé selon la revendication 2, le TLV de liaison constitutive étant émis pour ajouter une liaison constitutive, modifier une liaison constitutive ou supprimer une liaison constitutive de la liaison composite.
